# EUROPEAN PATENT SPECIFICATION

(11) **EP 2 577 164 B1**
(45) Date of publication and mention of the grant of the patent: **06.05.2015**
(21) Application number: 11724594.4
(22) Date of filing: 27.05.2011
(51) Int. Cl.: F24D 3/10

(54) **A MANIFOLD**
VERTEILER
COLLECTEUR

(30) Priority: 27.05.2010 GB 201008907
(43) Date of publication of application: 10.04.2013
(73) Proprietor: Madigan, Terence Gerard, Rathgar, Dublin 6 (IE)
(72) Inventor: MADIGAN, Terence Gerard, Dublin 6 (IE); OWENS, Anthony, Dublin 6 (IE); MADIGAN, Terence William, Dublin 4 (IE)
(74) Representative: O'Connor, Michael Donal
(86) International application number: PCT/EP2011/058729
(87) International publication number: WO 2011/147966

(56) References cited:
- EP-A2- 0 818 659
- DE-A1- 3 110 454
- DE-A1-102008 015 095
- DE-U1-202005 003 778
- GB-A- 2 443 341

## Description

### Introduction

This invention relates to a manifold having a casing, an internal divider partitioning the interior of the casing into a supply fluid chamber and a return fluid chamber, a plurality of flow ports and a plurality of return ports in communication with the supply fluid chamber and a plurality of flow ports and a plurality of return ports in communication with the return fluid chamber.

### Background to the Invention

Manifolds are generally used to manage transfer and distribution of energy and materials amongst a multiplicity of sources and sinks collectively comprising a fluid network, by means of one or more fluid substances. By controlling the distribution of fluid temperature, pressure and ingredient concentration throughout the network, heat and materials can be transferred, efficiently and conveniently.

Heat manifolds are commonly used in heating or refrigeration installations to transfer heat from one or more heat sources to one or more heat sinks. Each heat source and each heat sink is connected to the manifold via a flow tube and a return tube, together comprising a sub-circuit, through which a heat transfer fluid, generally an aqueous solution, is circulated. The various heat source and heat sink sub-circuits are linked together by the manifold and the circulating fluid is common to all sub-circuits. The desired heat transfer occurs through the direction of hotter fluid supplied from the heat sources to the heat sinks, displacing cooler fluid in the heat sinks which in turn is returned to the heat sources. The purpose of heat manifolds is to manage heat transfer where there are a multiplicity of heat sources and heat sinks, efficiently and conveniently.

The key to efficient heat exchange between an arbitrary number of heat sources and heat sinks by means of a heat manifold is effective partitioning of the heat transfer fluid into two regions, each of homogenous temperature, one 'hot', the other 'cold'. In a hydronic heating application, the hot region will typically be maintained at a temperature in the range 60 to 82 degrees Celsius once the hydronic system has attained thermal equilibrium. In space heating applications, the cold region will typically track 10 to 20 degrees Celsius below the temperature of the hot region.

In a heating application, an ideal heat manifold will exclusively direct fluid from the hot region to heat sinks; will exclusively direct fluid from the cold region to heat sources, and will direct incoming flows of heat transfer fluid to the hot and cold regions according to temperature, efficiently and conveniently. Low-temperature flows from heat sinks and departing to heat sources are connected together via a first common fluid gallery, a cold fluid chamber, otherwise referred to as a return chamber, in the manifold. High-temperature flows departing to heat sinks and arriving from heat sources are connected together via a second common fluid gallery, a hot fluid chamber otherwise referred to as a flow chamber.

Heat manifolds permit sink sub-circuits to be connected in parallel and fed from a common heat supply. They also permit source sub-circuits to be connected in parallel to a common heat distribution network. Generally these sink and source sub-circuits need to be independently controllable for flowrate in heating applications. It has been found that by arranging all fluid throughout the manifold to be at substantially the same total pressure regardless of flow conditions in each sub-circuit, the sub-circuits can be hydraulically separated from one another. Switching valves can then be dispensed with and heat flow in individual sub-circuits can be controlled independently of the rest of the heating system using respective circulation pumps.

In general, the algebraic sum of the steady-state volumetric fluid flows arriving and departing from each of the manifold chambers will not equal zero. Given that the total liquid inventory in the sub-circuits is substantially fixed, means of fluid recirculation between hot and cold chambers is required to relieve the build-up of a pressure differential between chambers which would disrupt the intended functioning of the manifold. Practical manifolds therefore incorporate a means of transfer or recirculation of fluid from the hot fluid chamber to the cold fluid chamber and from the cold fluid chamber to the hot fluid chamber, according to the prevailing flow imbalance. Typically, communicating ports or slots in the bounding walls between the chambers are used to permit passive fluid recirculation between the chambers, preventing the development of pressure differentials. However, it is desirable to minimise this recirculation as it has the effect of short-circuiting the transfer of heat from heat sources to heat sinks thereby reducing the heat transfer efficiency and effectiveness of the manifold. In fact, ideally recirculation will only be permitted to occur in response to the development of pressure differences between the chambers large enough to disrupt the hydraulic independence of the sub-circuits.

An example of one heat manifold known in the art is that described in EP0847515 in the name of Monard (Research & Development) Limited. EP0847515 discloses a manifold having a casing, an internal divider partitioning the interior of the casing into a hot fluid chamber and a cold fluid chamber, and a plurality of flow ports and a plurality of return ports in communication with the hot fluid chamber and the cold fluid chamber. Flow pipes for heat sinks extend from the flow ports through the cold fluid chamber, through an internal divider partition plate, and into the hot fluid chamber. A return pipe to a heat source extends from a return port through the hot fluid chamber, through the internal divider partition plate and into the cold fluid chamber. A plurality of communicating ports are provided in the internal divider partition plate to enable recirculation and relief of internal pressure differentials between hot and cold chambers.

A different approach to interconnection of pipework from heat sources and heat sinks to the hot and cold chambers in a heat manifold was disclosed by Sauter in US4,237,929. Here the need for some pipes connected to either hot or cold chambers to transect one or other chamber en-route to their destination chamber is avoided by attaching external plenums to each connecting pipe on the exterior casing wall of the heat manifold, large enough to abut one boundary wall of both the hot and the cold chambers. Within each plenum, a perforating hole through either the hot or cold chamber wall is provided. The effect of Sauters innovation is that connecting pipes do not have to be arranged into staggered rows in line with the perforating holes. EP0818659 (Schwürz) discloses a distributor which has straight track of flow and return ports and a sinusoidal partition wall.

The document, moreover, reveals the features of the preamble of claim 1.

There are however problems with the known types of heat manifold. Firstly, market expectations mandate that the heat manifold-to-pipework interface take the form of one or more linear arrays of alternating flow and return ports. Secondly the nature of the construction industry mandates that heat manifolds must have the capability to withstand substantial transmitted pipework loads as well as rough handling. This leads, in practice, to simultaneous design requirements for complex internal ducting, high strength and low unit cost. In prior art heat manifolds these somewhat contradictory requirements have been met using either welded sheet metal or cast and machined metal constructions of significant complexity. Examples of this practice are disclosed by Monard in EP0847515, by Corbett in US 7,191,789 relating to a modular heat manifold concept made of metal tubing and castings and by Ojala in EP01546611 B1 concerning a compact heat manifold arrangement using either cast iron or metal plate construction.

In the Monard and Corbett disclosures, the problem of providing the market-preferred linear porting arrangement is overcome by the flow and/or return pipe transecting one chamber en-route to the other chamber. However, this solution is undesirable for a number of reasons. Firstly, it is necessary to provide a large number of sealed lead-throughs internally in order to prevent excessive internal leakage or short circuiting of fluid and consequently heat between the chambers, complicating the fabrication of the manifold. Secondly, the overall dimensions of the manifold must be increased to offset the obstructing effects of the pipes transecting the chambers on flow along the chambers.

Another limitation of known manifolds is that they provide little pipework configuration flexibility. More specifically, they do not allow the user to freely mix heat sink and heat source port pairs and to connect these at arbitrarily-chosen positions on the manifold, or to adjust number and size of manifold pipe connections. This does not lend itself to convenient new or retrofit installations in modern space-constrained dwellings. The Ojala disclosure goes some way to alleviating these limitations while also providing the market-preferred linear porting arrangement, using a partially modular arrangement of bolt-on fitting. This approach suffers however from high manufacturing costs and involves a large number of pressure-tight joints as the number of ports to be provided becomes large.

None of the disclosed heat manifolds anticipate manifold mounting at arbitrary angular orientations, for example, horizontally, inclined vertically or inverted. All are designed for one preferred mounting orientation, locating the hot chamber above the cold chamber.

In most fields of engineering design involving fluid-handling, plastic materials have displaced established metal materials. This is frequently attributable to the superior 'shapeability' of polymer resins relative to commonly used metal alloys when manufacturing complicated three-dimensional components. The low unit costs of plastic components made using injection moulding processes commonly enable identical or greater functionality to be delivered while obtaining substantial cost reduction. Given the requirement for precise three dimensional hollow components to construct heat manifolds for dwellings, execution of a plastic design should in theory be more cost effective than an equivalent metal design.

However, conflicting requirements of significant internal ducting complexity and high strength have limited the scope for cost reduction of heat manifolds through substitution of plastics for metals. This is primarily due to their inferior strength and robustness when used for heat manifold applications which involve high transmitted pipework forces, rough handling during installation and long term exposure to the creep and hydrolysis effects of aqueous fluid at elevated temperatures for periods of many years. This has frustrated the evolution and widespread commercialisation of low cost heat manifold technology. In summary, known heat manifold technology has failed to reconcile the conflicting requirements of inherent geometric complexity and ease of manufacture, because substitution of moulded plastics for metal-based technology has been blocked by the need to resist high pipework forces over many years of service.

Yet another limitation of known heat manifolds is that adequate control of thermosiphonic effects in idle sub-circuits generally requires a pressure-operated flow control valve to be incorporated into each sub-circuit. The main value of such valves is the bias pressure (also known as 'cracking pressure') necessary to cause them to open, typically 3" of H₂O head, which exceeds the maximum pressure differentials commonly generated by the thermosiphonic effect in typical hydronic heating systems. These additional valves add to the cost, bulk and complexity of heating systems employing heat manifolds.

Furthermore, all disclosed heat manifolds suffer from an inefficiency of heat exchange between multiple heat sources and multiple heat sinks due to the existence of some uncontrolled and unnecessary internal leakage of fluid through the communicating openings between the high and low temperature chambers. Fluid transfer between chambers is essential to equalise fluid pressure at the connections of the various hydronic sub-circuits to the manifold, preventing 'crosstalk' between operating and idle sub-circuits and enforcing hydraulic separation between sub-circuits. Fluid interchange between chambers is only required to the extent necessary to limit development of significant differential pressure between chambers. All other fluid interchange represents wasteful internal short-circuiting of heat.

The recited problems of cost, bulk, inflexibility, lack of installation convenience and thermal inefficiency limit the widespread adoption of heat manifold technology for multi-source/multi-sink heating systems for dwellings. It is an object of the present invention to provide a manifold that overcomes at least some of the problems with the known types of manifold. More specifically, it is an object of the invention to provide a manifold that is relatively inexpensive to manufacture while at the same time being robust and durable and thermally efficient in operation.

### Summary of the Invention

According to the invention there is provided a manifold according to claim 1.

By having such a construction of manifold, the manifold will have a casing which will be sufficiently rugged to withstand high loads imparted upon it by connected pipework, careless installation or rough handling. By using a second, readily shapeable material for the insert which is not subject to high loads, the manifold will be significantly less complex and less expensive to manufacture than the known manifolds.

In one embodiment of the invention there is provided a manifold in which the second, shapeable material is a plastic material. The plastic material will be easily moulded to shape. By using a plastic material, the required complexity of the internal fluid connections can be integrated into plastic moulded parts which can have arbitrarily complex three dimensional shapes at low unit cost reducing the cost of manufacture of the manifold. Furthermore, the plastic material will help minimise undesirable heat transfer between the hot fluid chamber and the cold fluid chamber thereby improving the efficiency of the manifold.

In a further embodiment of the invention there is provided a manifold in which the second, shapeable material is a thin metal material. The advantage of using a thin metal material is that it will be easily deep-drawn, stamped and coined to shape. By "thin", what is meant is a metal material having a thickness of not greater than 2mm.

In another embodiment of the invention there is provided a manifold in which the first, rugged material is one of or a combination of a metal material and a composite fibre-reinforced resin.

In one embodiment of the invention there is provided a manifold in which there is provided a pressure-relieving recirculation passageway in the internal divider defining a fluid path between the second fluid chamber and the first fluid chamber, and in which there is provided a pressure-operated flow control valve disposed in said fluid recirculation passageway. By providing a flow control valve in the recirculation passageway, fluid transfer in either direction requires the development of a differential pressure greater than the bias or opening pressure of the valve. The chosen bias pressure must exceed the largest anticipated pressure head from the sum of buoyancy effects and dynamic head losses within the manifold during intended use, yet be less than the bias pressures of the flow control valves fitted to the sub-circuits. In practice, given the very small pressure differentials that occur within properly-dimensioned heat manifolds due to such effects, the bias pressure of the recirculation flow control valve can be very small, typically in the range 1 - 3 inches of H₂O head. The effect of such a flow control valve in the recirculation passageway is to prevent uncontrolled and unnecessary internal leakage or short-circuiting of fluid between hot and cold chambers due to jetting, natural diffusion and thermosiphonic (buoyancy) effects, enabling a significantly more efficient transfer of heat from the heat sources to the heat sinks.

One commonly-found type of flow control valve is the pressure-actuated, normally-closed, biased non-return valve. This responds to applied fluid pressure differentials in the flow direction only, by opening to permit flow once a 'cracking' pressure differential has been achieved. In a further embodiment of the invention there is provided a manifold in which the provided flow control valve is a biased non-return valve and in which there is further provided a second non-return valve disposed in another fluid recirculation passageway, whose flow direction is opposite to the first non-return valve. According to this preferred embodiment, pressure equalization may occur regardless of the direction of the pressure differential between the hot fluid chamber and the cold fluid chamber, by means of controlled recirculation, based on the use of a commonly-found type of flow control valve.

In one embodiment of the invention, there is provided a first fluid passageway in the internal divider defining a first fluid path between the first fluid chamber and the second fluid chamber, and in which there is provided a first pressure-operated flow control valve arrangement disposed in the first fluid passageway.

In another embodiment there is provided a second fluid passageway in the internal divider defining a second fluid path between the first fluid chamber and the second fluid chamber, and in which there is provided a second pressure-operated flow control valve arrangement disposed in the second fluid passageway, said second flow control valve arrangement is mounted in the second fluid passageway with opposite polarity to the first pressure-operated flow control valve arrangement in the first fluid passageway so that each of the flow control valves operates to permit flow in one direction only while substantially preventing flow in the opposite direction.

In another embodiment of the invention there is provided a manifold in which there is provided a pressure-operated flow control valve disposed in each of a plurality of the flow ports and of a plurality of the return ports. The pressure operated flow control valve will be normally closed and may be provided by a non-return valve. In this way, it will be possible to obviate the need for active flow control valves as the pressure activated non-return valves will be sufficient to prevent parasitic flow in sub-circuits that are not in use at that time. Such parasitic flows can be caused by thermosiphonic forces arising in sub-circuits where heat sinks are elevated substantially above the manifold or where heat sources are located substantially below the altitude of the manifold. They can also be caused by minor residual total pressure differentials within the heat manifold, despite the pressure equalising effects of the internal recirculation means, which may equal or exceed the value of the bias pressure of the recirculation flow control valve arrangement.

In one embodiment of the invention there is provided a manifold in which the non-return valves in the plurality of flow ports and the plurality of return ports are integrated into the insert. This is seen as particularly preferred as it will not be necessary for the individual installing the manifold to provide additional non-return valves or other controlled valves as they will already be provided in the insert of the manifold. This will aid cost-effective installation of the manifold and will obviate the possibility of a valve being inserted incorrectly during installation.

In a further embodiment of the invention there is provided a manifold in which the non-return valves in the plurality of flow ports and the plurality of return ports are integrated into the casing.

In one embodiment of the invention there is provided a manifold in which the insert defines a plurality of plenums adjacent the flow ports and the return ports intermediate the chambers and the casing. Each plenum is connected to either the hot or cold chamber by means of a communicating passageway which may be fitted with a biased flow control valve. By having such plena, it is possible to locate flow and return ports in the casing at positions which are substantially offset from the location of the respective hot and cold chambers. As long as a flow or return port transecting the casing wall communicates with the correct plenum, it will in turn communicate with the correct fluid chamber, providing considerable freedom in the positioning of ports on the casing wall. This results in a very flexible manifold that provides considerable freedom to the individual installing the manifold to add custom porting using simple tools without fear of making the port in the wrong place. This feature facilitates the mounting of de-aeration valves, sensors, and the provision of additional sub-circuits in the field. Furthermore, by locating each flow control valve substantially in the plenum region, the dimensional constraints on flow control valve diameter and flow area imposed by location of the flow control valve in the connection ports is avoided. Larger bore valves are then possible, minimizing energy losses and flow noise.

In a further embodiment of the invention there is provided a manifold in which there is provided a removable barrier intermediate an adjacent pair of plenums. In this way, the plenums can be joined to one or more adjacent plenums by removing the barrier, thereby allowing greater freedom to the installer to place the return and flow pipes in a manner of their choosing provided that the non-return valves in the internal divider are appropriately arranged.

In a further embodiment of the invention there is provided a manifold in which the insert is a modular construction comprising a plurality of components connected together, each of the components having a connector for engagement of an adjacent component.

According to the invention there is provided a manifold in which the internal divider comprises a pair of intertwined co-axial helical walls extending along the longitudinal axis of the manifold defining a substantially helically shaped hot fluid chamber and a substantially helically shaped cold fluid chamber therebetween.

In one embodiment of the invention there is provided a manifold in which the pair of intertwined co-axial helical walls are mounted about an inner tube.

In another embodiment of the invention there is provided a manifold in which the tube is substantially hollow, open at each end and with a divider plate intermediate its ends blocking the tube into two distinct sections, each section having a passageway defining a fluid path between the hot fluid chamber and the cold fluid chamber. This passageway forms a pressure-relieving recirculation passageway.

In one embodiment of the invention there is provided a manifold in which there is provided a pressure-operated normally-closed flow control valve disposed in each of the passageways, one of which is arranged to selectively permit fluid flow in a direction from the hot fluid chamber to the cold fluid chamber and the other of which is arranged to selectively permit fluid flow in a direction from the cold fluid chamber to the hot fluid chamber.

In one embodiment the insert is mounted within the casing by side rails on the insert which slidably engage within complementary grooves on an internal surface of the casing.

In another embodiment the pressure-operated flow control valve comprises a valve head slidably mounted on an associated valve guide on the insert and biased by a spring mounted between the insert and the valve head against a valve seat formed at an inside face of the casing at a port in a side wall of the casing.

In a further embodiment an endless elastomeric seal is mounted within a complementary peripheral channel in the valve head for sealing engagement between the valve head and the valve seat.

### Brief Description of the Drawings

The invention will now be more clearly understood from the following description of some embodiments thereof, given by way of example only with reference to the accompanying drawings, in which:-
Figure 1 is a schematic diagram of a heat manifold according to the invention integrated into a fluid distribution system;
Figure 2 is a perspective view of a first embodiment of heat manifold not encompassed by the claims;
Figure 3 is a partially exploded perspective view of the manifold shown in Figure 2;
Figure 4 is a cross-sectional view along the lines A-A of Figure 2;
Figure 5 is a partially exploded, part cross-sectional view of the manifold according to the first embodiment;
Figure 6 is a cross-sectional view along the lines B-B of Figure 2;
Figure 7 is a perspective view of a second embodiment of manifold not encompassed by the claims;
Figure 8 is a perspective view of the manifold shown in Figure 7 with the outer casing in ghost outline;
Figure 9 is a perspective view of the insert for the manifold shown in Figures 7 and 8;
Figure 10 is an exploded view of the insert shown in Figure 9;
Figure 11 is an alternative embodiment of insert of the manifold not encompassed by the claims;
Figure 12 is a perspective view shown from below of the insert shown in Figure 11;
Figures 12(a) and 12(b) are perspective views of a component of the insert showing the recirculation flows;
Figure 13 is an exploded view of the insert shown in Figures 11 and 12;
Figure 14 is a perspective view of a manifold according to the present invention;
Figure 15 is a front view of the manifold shown in Figure 14;
Figure 16 is a plan view of the manifold shown in Figure 14;
Figure 17 is a view from below of the manifold shown in Figure 14;
Figure 18 is an exploded view showing the components of the manifold shown in Figure 14;
Figure 19 is a cross-sectional view shown in outline of the manifold along the lines C-C of Figure 14;
Figure 20 is a cross-sectional view shown in outline of the manifold along the lines D-D of Figure 14;
Figure 21 is a front view of the manifold shown in Figure 14 with the casing shown in ghost outline; and
Fig. 22 is a sectional view showing an alternative valve mounting arrangement for the manifold of Figs. 2 to 6.

### Detailed Description of Preferred Embodiments

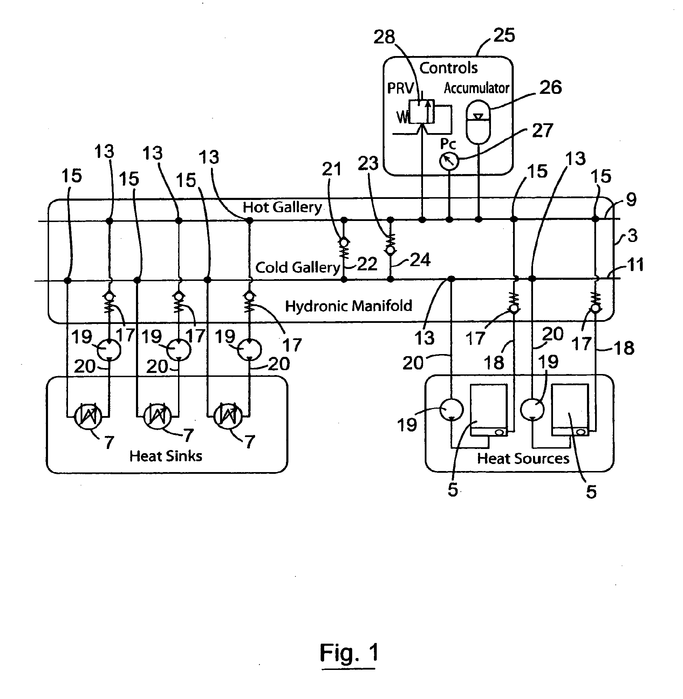

Referring to Figure 1 there is shown a fluid network, indicated generally by the reference numeral 1, comprising a manifold 3, a plurality of heat sources 5 and a plurality of heat sinks 7. Each of the heat sources 5 and each of the heat sinks 7 are connected to the manifold 3 and each heat source 5 and each heat sink 7 together with a flow port and a return port comprise a sub-circuit of the overall fluid network 1. A fluid medium in the fluid network 1 is shared and serves to transport heat and/or materials from the heat sources 5 to the heat sinks 7. The function of the manifold 3 is to facilitate simultaneous independent routing and control of heat and/or materials between the heat sources 5 and the heat sinks 7.

The manifold 3 further comprises a first fluid chamber 9, in this case, a hot gallery 9, and a second fluid chamber 11, in this case, a cold gallery 11. Each of the heat sources 5 is connected to a flow port 13 of the cold gallery 11 and a return port 15 of the hot gallery 9. A flow control valve 17 is placed in a return path 18 to the hot gallery 9. Each heat source 5 sub-circuit further comprises a pump 19 provided in a flow path 20 between the manifold 3 and the heat source 5. Each heat sink 7 sub-circuit comprises a flow port 13 connected to the hot gallery 9 of the manifold 3 and a return port 15 connected to the cold gallery 11 of the manifold 3. Each heat sink 7 is further provided with a flow control valve 17 and a pump 19 in the flow path 20 between the flow port 13 and the heat sink 7. A flow control arrangement consisting of a pair of non-return valves 21, 23 is provided in the manifold 3. Each non-return valve 21, 23 is mounted in a fluid passageway 22, 24 respectively, between the hot gallery 9 and the cold gallery 11. The polarity of the non-retum valve 21 is opposite to the polarity of the non-return valve 23. Finally, controls and instrumentation 25, for example, an accumulator 26, a pressure sensor 27, and a pressure relieving valve 28 may advantageously be mounted to the manifold 3 to facilitate safe operation and monitoring.

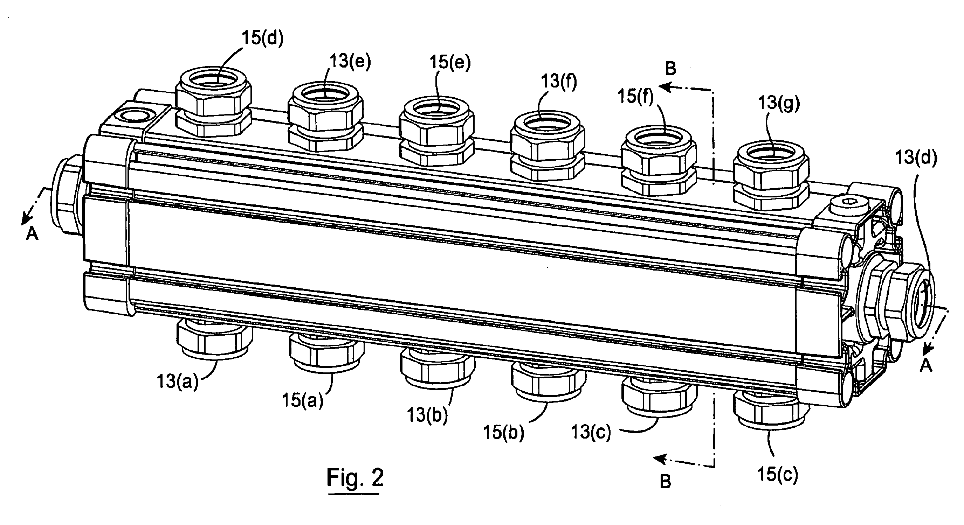

Referring to Figures 2 to 6 inclusive, there is shown a first embodiment of heat manifold 3. The heat manifold 3 comprises a casing sub-assembly 31 and an insert sub-assembly 33. The insert sub-assembly 33 comprises an internal divider 35 which partitions an interior of the casing 31 into the hot fluid chamber 9 and the cold fluid chamber 11. The manifold 3 comprises a plurality of flow ports 13(a) - 13(g) in communication with one of the hot fluid chamber 9 and the cold fluid chamber 11 and a plurality of return ports 15(a)-15(g) in communication with one of the hot fluid chamber 9 and the cold fluid chamber 11. Of these, at least some of the plurality of flow ports 13(a)-13(g) will be in communication with the hot fluid chamber 9 and at least some of the plurality of the flow ports 13(a)-13(g) will be in communication with the cold fluid chamber 11. Similarly, at least some of the plurality of return ports 15(a)-15(g) will be in communication with the cold fluid chamber 11 and at least some of the plurality of return ports 15(a)-15(g) will be in communication with the hot fluid chamber 9.

The flow port 13(a) and return port 15(a), along with a heat sink (not shown) form one sub-circuit of a heating installation. The flow port 13(b) and the return port 15(b), along with a second heat sink (not shown), form a second sub-circuit of the heating installation. The flow port 13(c) and the return port 15(c), together with a third heat sink (not shown) form a third sub-circuit of the heating installation. The return port 15(g) and the flow port 13(d), along with a heat source (not shown), form a fourth sub-circuit of the heating installation and a return port 15(d) and a flow port 13(e), along with a heat source (not shown) form a fifth sub-circuit of the heating installation. The flow port 13(f) and the return port 15(e), together with a heat source are able to form a sixth sub-circuit of the heating installation and the flow port 13(g) along with the return port 15(f) and a heat source can form a seventh sub-circuit of the heating installation. It will be apparent that fewer or more sub-circuits may be realised by means of a shorter or longer manifold 3. Furthermore, the manifold 3 may be constructed in modular form and assembled to provide the required number of ports 13, 15 for the sub-circuits of a fluid network 1. The connection of heat sources 5 and heat sinks 7 is arbitrary and the above example is not to be interpreted as limited to that configuration.

The manifold 3 further comprises a plurality of non-return valves 37(a) - 37(g) disposed in the return ports 15(a)-15(f) and the flow port 13(f). If desired, further non-return valves can be provided in the remaining flow ports 13 also. The non-return valves 37 are spring-biased to the closed state, i.e. a threshold cracking pressure differential needs to be applied to cause opening of each valve 37.

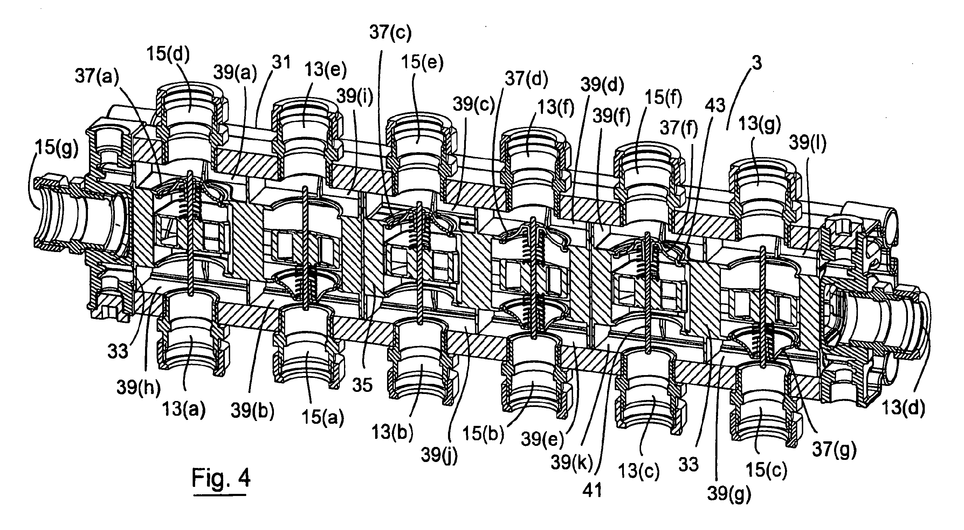

Referring specifically to Figure 4, it can be seen that there is provided a non-return valve 37(a), 37(b), 37(c), 37(d), 37(e), 37(f) and 37(g) in each of the return ports 15(d), 15(a), 15(e), 15(b), 15(f) and 15(c) respectively, however neither the flow port 13(d) or the return port 15(g) have a non-return valve therein. It will be understood that non-return valves could be positioned in either flow port 13(d) and/or the return port 15 (g) if desired and indeed normally will be provided.

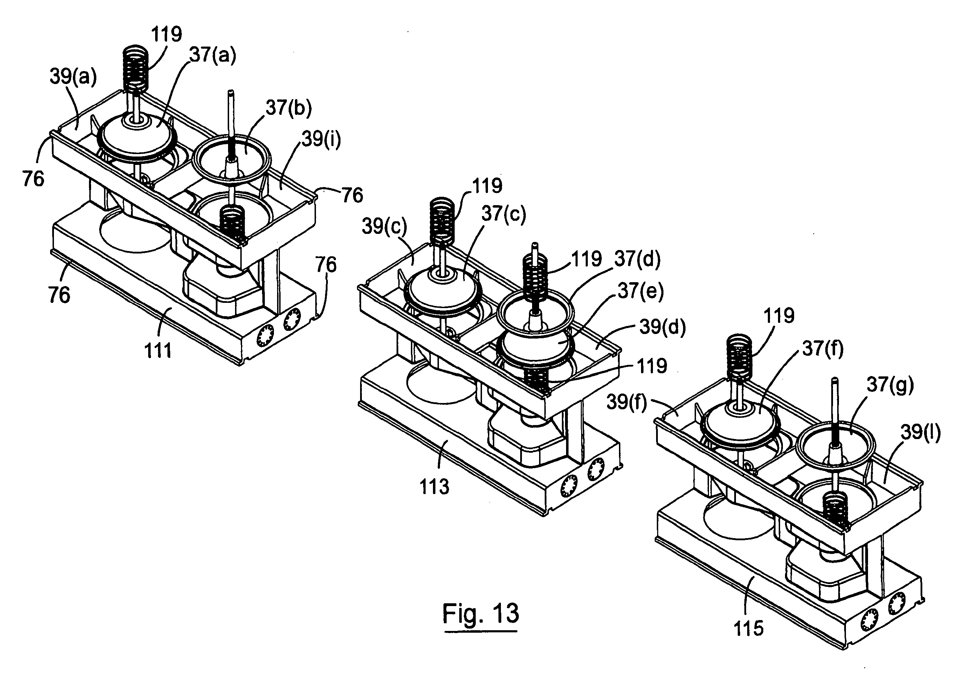

A variety of non-return valve 37 types are suitable. For example, reed or disc valves 37(b), 37(e) and 37(g) provide a simple compact solution with low pressure drop. In the disc valve embodiment shown, the intrinsic elasticity of the sealing elastomer is employed to provide a biased opening pressure within a desired range, ideally in combination with an integrally moulded metal energising spring to combat stress relaxation effects. Suitable materials for such valves include fabric reinforced elastomers chosen for compatibility with the fluid medium. Referring to Figure 13, coil spring-biased poppet valves 37(a) - 37(g) may also be used to similar effect. Other methods of valve biasing may also be used, for example, magnetic fields.

The bias pressure of the non-return valves 37(a) - 37(g) prevents parasitic flow of hot water to any heat sink 7 or heat source 5 sub-circuits that are idle. Only those sub-circuits wherein flow is being positively pumped will allow water to be drawn through the non-return valve 37 and through the respective flow port 13. Return water from the sub-circuits arrives via the return ports 15 and non-return valves 37 before re-entering the manifold 3. Flows returning from heat sinks 7 via ports 15(a), 15(b) and 15(c) enter into the cold fluid chamber 11 after passing by non-return valves (NRVs) 37(b), 37(e) and 37(g) respectively. Flows returning from heat sources 5 via ports 15(g) and 15(d) enter into the hot fluid chamber 9. The flow through port 15(d) passes NRV 37(a). Preferably, a NRV will be provided at the port 15(g) also.

There are heat manifold applications where placing certain flow or return ports on regular pitch positions is too restrictive. The manifold 3 facilitates considerable flexibility in the location of ports through the provision of compact plena 39 integrated into the insert sub-assembly 33. The manifold 3 comprises a plurality of plena 39(a)-39(I) adjacent the flow ports 13(a) - 13(c) and 13(e) - 13(g) and the return ports 15(a)-15(f). Each of these plena 39 acts as a conduit for linking the respective flow port 13 or return port 15 in the wall of the casing 31 to the hot chamber 9 or the cold chamber 11. The advantage of such plena 39(a) - 39(I) is that the regularly pitched fixed internal port positions defined by the insert 33 need not apply to the external ports through the casing wall. Indeed, the locations of the external ports through the casing wall may vary significantly.

These plena 39(a) - 39(I) therefore amount to a double-wall between the fluid chambers 9, 11 inside the manifold 3 and the exterior of the manifold 3. Each plenum 39 can be considered to be an extension of the respective flow port 13 or return port 15 with which it is associated. In the embodiment shown in Figure 4, the non-return valves 37(a)-37(g) are in fact mounted in internal ports provided in the wall of the plena 39 between the interior of the plena 39 and one of the hot or cold fluid chambers 9, 11, however due to the fact that the plena 39 are considered to be an extension of the flow port 13 or return port 15, the non-return valve 37 is described as being disposed in the flow port 13 or the return port 15 respectively.

The plurality of neighbouring plena 39(a)-39(I) are separated from each other by way of a barrier, otherwise referred to as a partition wall 41. The partition walls 41 are preferably removable, facilitating the linking together of adjacent plena 39 to increase the distance by which an internal port through the plena wall and associated external port through the manifold wall may be offset from one another. Removal of a partition wall 41 also facilitates the creation of additional recirculation passageways using unused plena 39, that is, plena 39 which lack a corresponding external port through the casing wall (in some cases an external port will be sealed rather than being connected as part of a sub-circuit). It is envisaged that the partition walls 41 may be scored appropriately to facilitate their removal without the use of tools.

A plurality of pressure relieving recirculation passageways must be provided to allow a fluid path between the hot fluid chamber 9 and the cold fluid chamber 11 so that in the event of a pressure imbalance between fluid chambers 9, 11, fluid transfer can occur to limit the pressure differential.

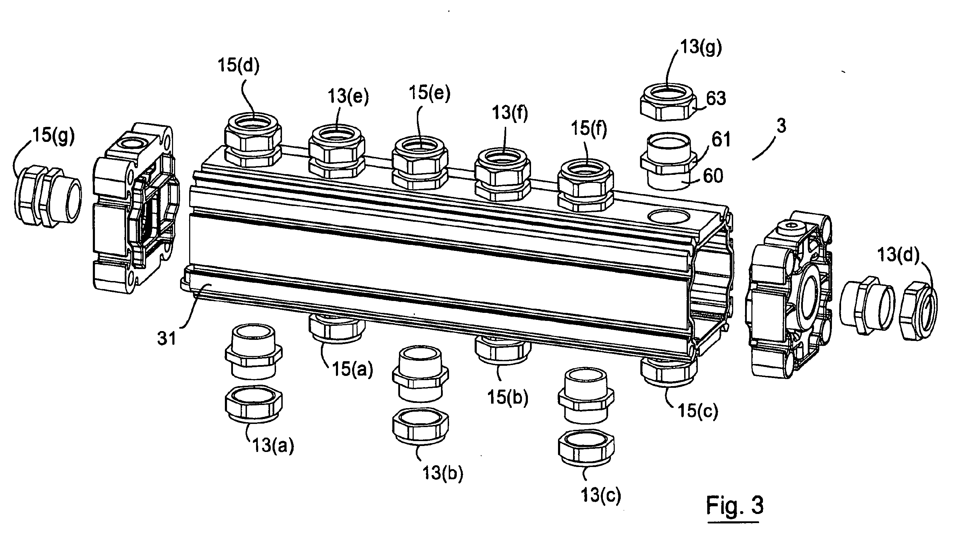

Referring specifically to Figure 3 of the drawings, it can be seen that the ports 13, 15 may be adapted to accept tube fittings to facilitate connection to piping (not shown). The robust proportions and metal construction of the casing tube 31 readily accommodate bending moments arising during installation and operation.

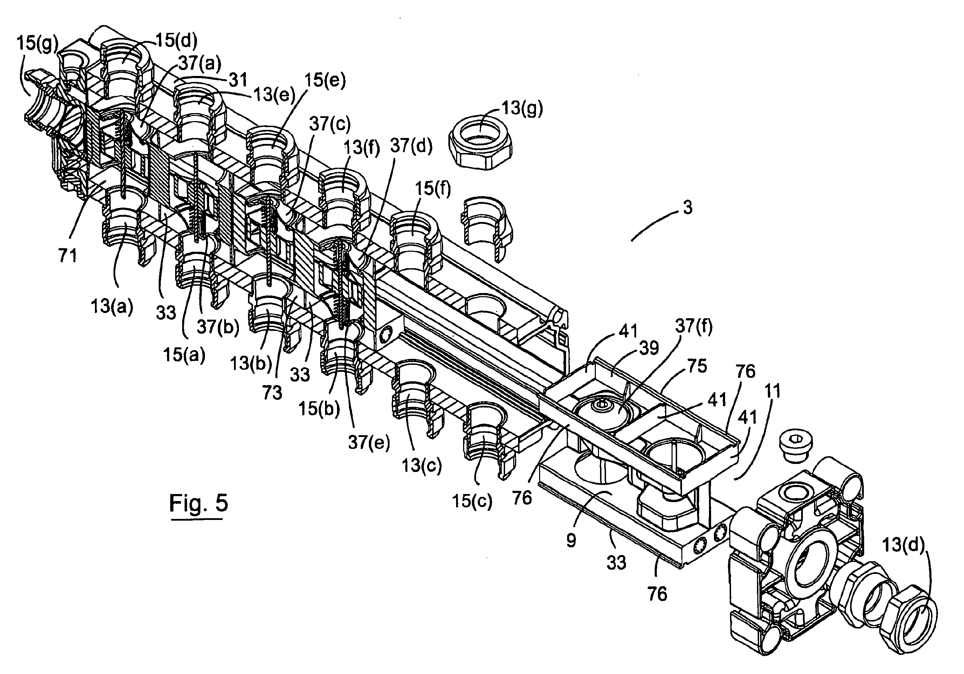

Referring specifically to Figure 5, it can be seen that the insert 33 is effectively of a modular construction comprising a plurality of insert components 71, 73, 75. Component 75 is shown removed from the casing 31. The three insert components 71, 73, 75 are arranged end to end and mounted in the casing 31. Therefore, it can be seen that different lengths of manifold 3, with different numbers of flow ports 13 and return ports 15, can be provided by using different lengths of casing 31 and an appropriate number of insert components 71, 73, 75. It is also possible to construct the casing tube 31 as a modular stack of short tubular elements, connected via simple static seals, for example thin flat gaskets or sealant, and bolted together.

The insert components 71, 73, 75 take advantage of the use of extrusion technology for the manufacture of the casing tube 31 by engaging side rails 76 into complementary grooves 77 in the internal surfaces of the casing tube 31, improving mechanical strength and creep resistance. These grooves also serve to accurately align the abutting baffles so as to minimise any tendency to leakage of fluid from one chamber 9, 11 to the other. The baffles are also embedded into close-fitting slots formed in the inside surface of the casing end caps, in which they are free to slide under the influence of a compression spring and any tendency to differential thermal expansion of the entire insert sub assembly relative to the casing sub assembly.

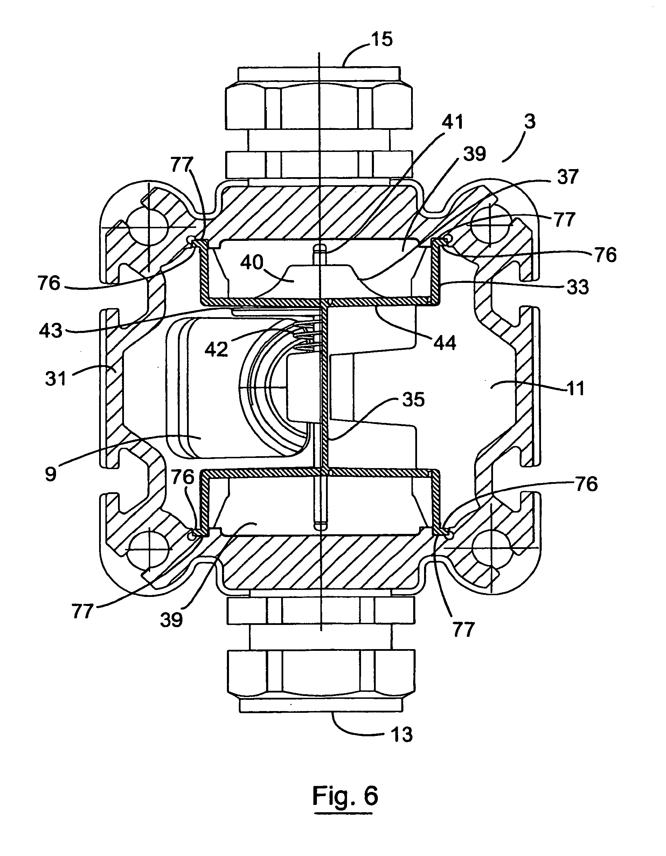

Referring to Figure 6, there is shown a cross-sectional view taken along the lines B-B of Figure 2. It can be seen that the interior of the manifold 3 comprises a hot fluid chamber 9 and a cold fluid chamber 11. An internal divider 35 on the insert 33 separates the hot fluid chamber 9 and cold fluid chambers 11. In this case the non-return valve 37 is mounted on the insert 33 and comprises a valve head 40 slidably mounted on a valve guide 41 and biased into a closed position by a spring 42 against a valve seat 43 formed about a periphery of an opening in an inner wall 44 of the plenum 39. The valve guide 41 is formed by a spindle mounted on the insert 33 as shown in Fig. 6 and also in Fig. 4.

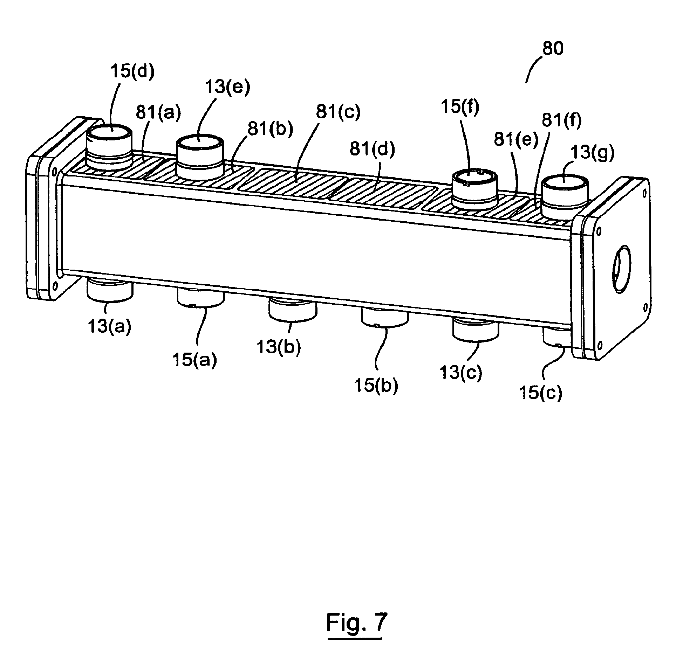

Referring to Figure 7, there is shown a second embodiment of manifold indicated generally by the reference numeral 80, where like parts have been given the same reference numeral as before. The manifold 80 has a plurality of zones depicted by the shaded regions 81 (a)-81 (f) where it is possible to provide a port. Ports 15(d), 13(e), 15(f) and 13(g) are mounted on zones 81 (a), 81 (b), 81(e) and 81(f) respectively. These zones 81 (a) - 81 (f) correspond to the plena (not shown) below. A port provided anywhere on the corresponding zone will communicate with the plenum below and in turn with the hot chamber 9 or cold chamber 11 through an internal port in the plenum. For example, the port 13(e) may be provided anywhere on zone 81(b). In this way, ports can be drilled on site to facilitate non-uniform pipe spacing or new requirements.

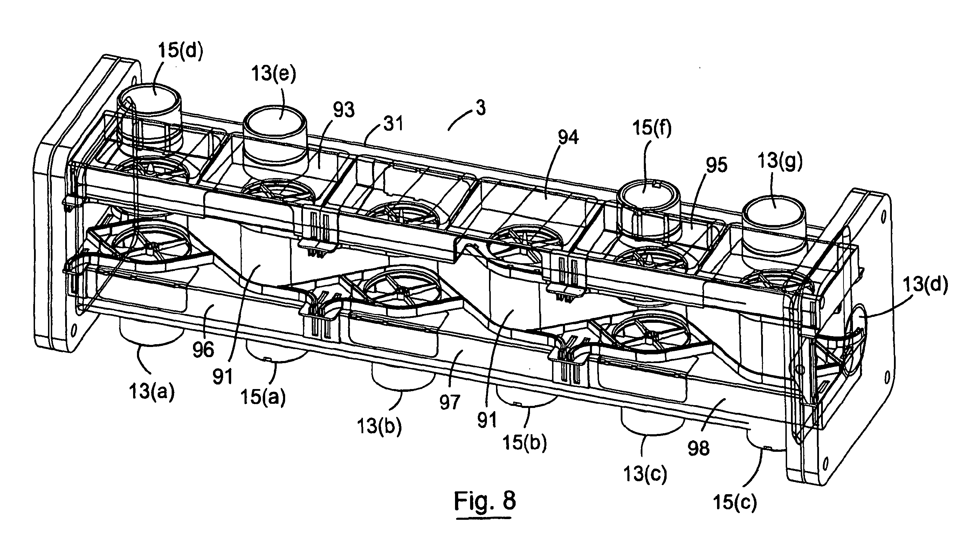

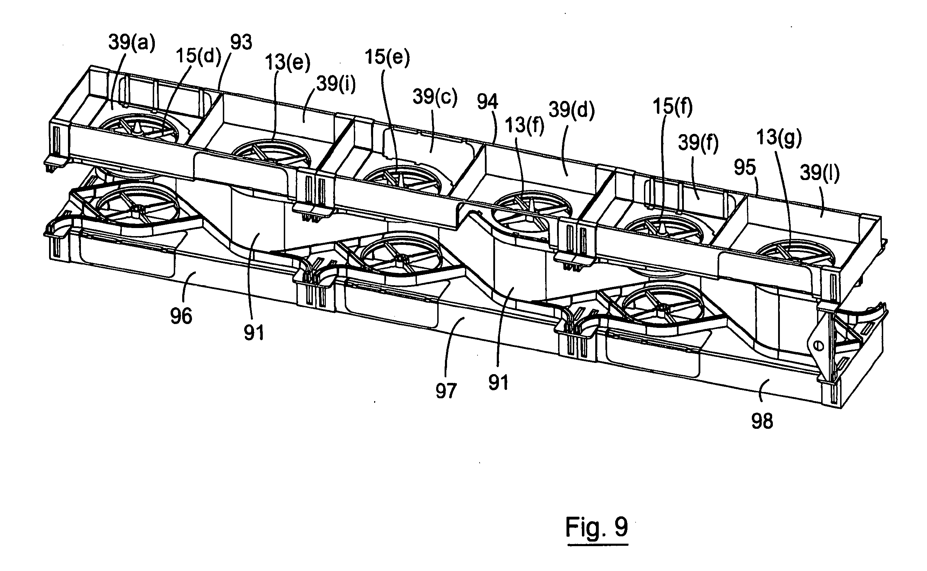

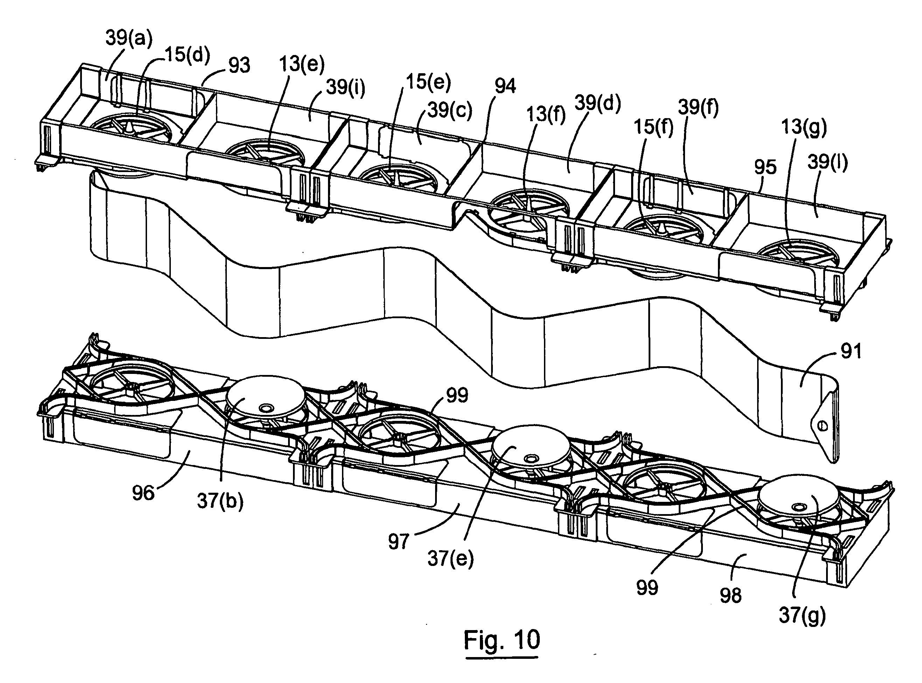

Referring to Figures 8 to 10 inclusive, there is shown an alternative insert indicated generally by the reference numeral 90, where like parts have been given the same reference numeral as before. The insert 90 comprises a divider wall 91 extending along a longitudinal axis of the manifold 3 and traversing the manifold 3 from side to side as it extends along the length of the manifold insert 90. The divider wall 91 is corrugated in shape. In this way, the interior of the manifold 3 is separated into a pair of chambers, a hot fluid chamber 9 on one side of the divider wall 91 and a cold fluid chamber 11 on the other side of the divider wall 91. This is achieved without any lead-throughs passing through the divider wall 91. In this way, hot water coming from the heat sources can be directed to a hot fluid chamber 9 and then on to the heat sinks 7 and cold water returning from the heat sinks 7 can be directed to a cold fluid chamber 11 for onward distribution to the heat sources 5. By doing this the hot and cold fluid streams are segregated efficiently and the parasitic heat loses in the manifold 3 are reduced.

In this case the insert comprises upper insert components 93, 94, 95 and associated lower insert components 96, 97, 98 interconnected by the divider wall 91 which extends between and engages with the upper and lower insert components. Top and bottom edges of the divider wall 91 locate within complementary support channels 99 on inner faces of the insert components 93-98.

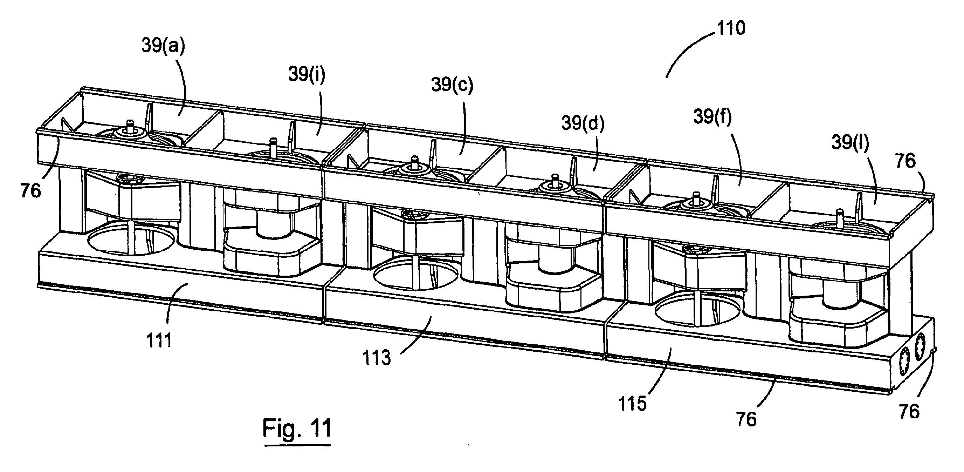

Referring to Figures 11 to 13 inclusive, there is shown another manifold insert indicated generally by the reference numeral 110, where like parts have been given the same reference numeral as before. The insert 110 is similar to the insert 33 used in the manifold shown in Figures 1 to 6 inclusive. In this case however instead of having a single divider wall, the insert 110 is divided into three insert components 111, 113, 115 that may be joined together in an end-to-end fashion together forming the insert and the divider wall. This will further facilitate modularity of the insert and the manifold. An arbitrary number of insert components 111, 113, 115 may be connected together end-to-end and appropriate fasteners may be provided to connect the insert components 111, 113, 115 together. It can be seen that seatings 117 are provided to retain a non-return valve 37 in position and springs 119 are used to bias the valve shut. This is seen as a particularly useful arrangement as it allows a very flexible arrangement of ports in the manifold 3.

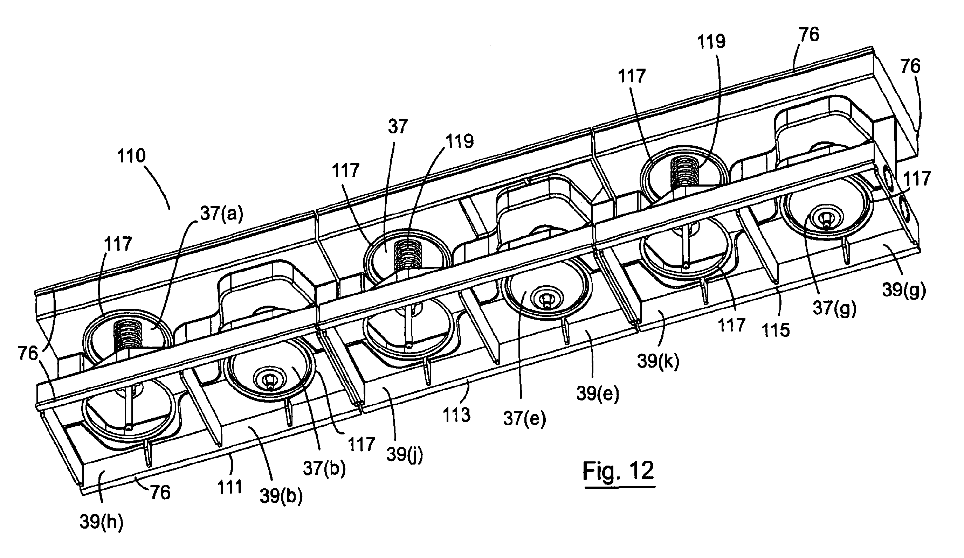

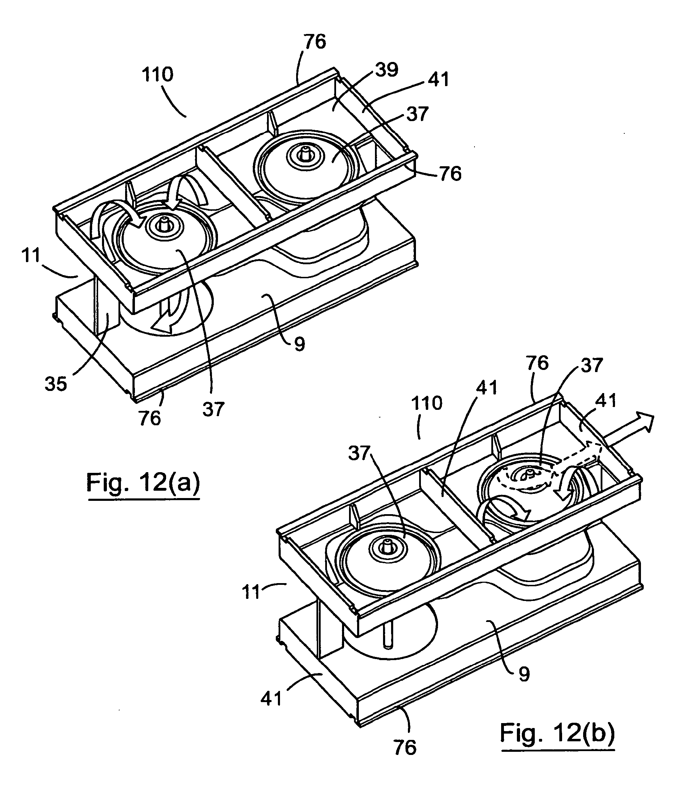

Referring specifically to Figures 12(a) and 12(b), there is shown a pair of views demonstrating recirculation in the manifold 3. Figure 12(a) shows how fluid from the cold fluid chamber 11 recirculates by passing through a snap-out section in a wall of the upper left hand side plenum into the plenum proper, thence down through a pressure-operated normally-closed flow control valve and into the hot fluid chamber 9. Figure 12(b) shows the reverse i.e. how fluid from the hot fluid chamber 9 recirculates by passing through a snap-out section in a wall of the upper right hand side plenum into the plenum proper, thence down through a pressure-operated normally-closed flow control valve and into the cold fluid chamber 11. These functions operate at the same time as the inflow and outflow of fluid from a source to the right hand side and left hand side top plena respectively and are superposed upon such flows.

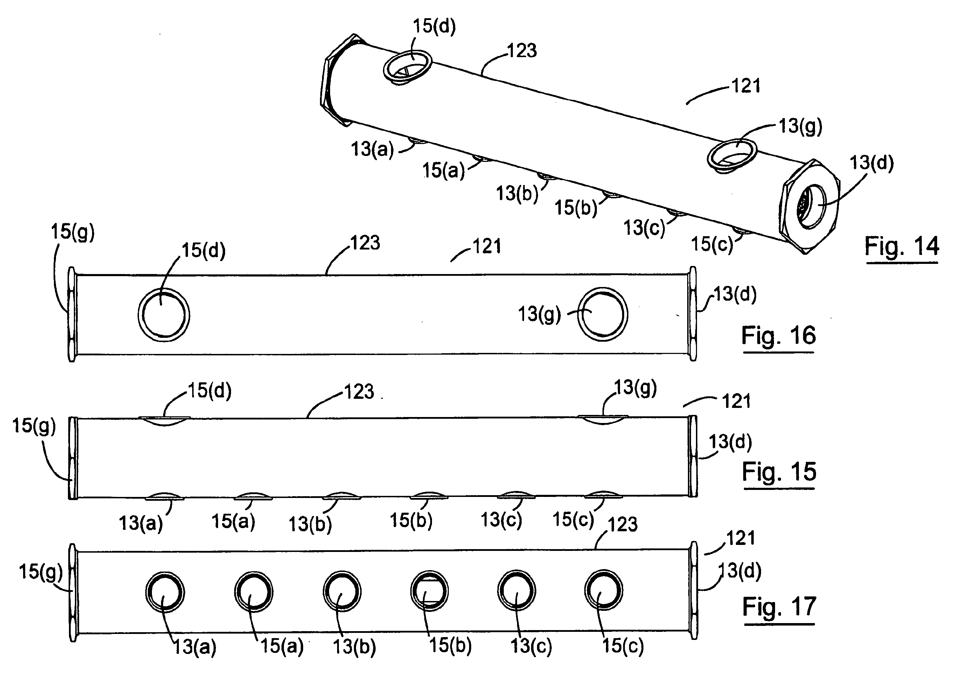

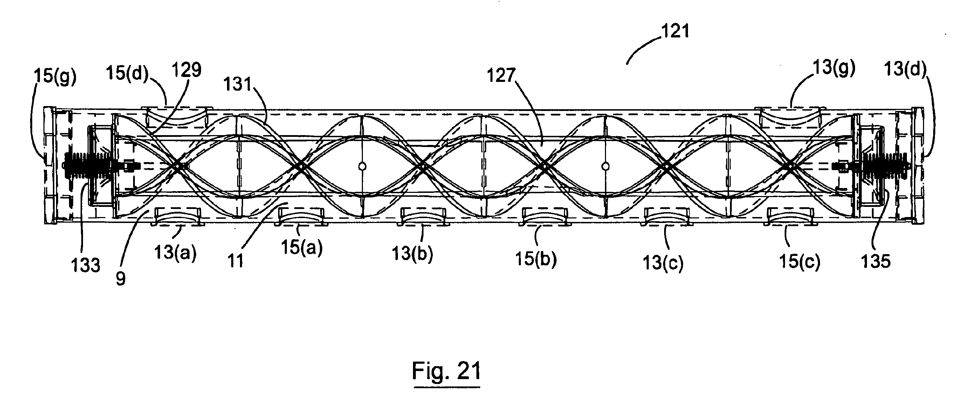

Referring to Figures 14 to 21 of the drawings, there is shown a third embodiment of manifold according to the invention, indicated generally by the reference numeral 121. The manifold comprises a tubular casing 123. For reasons of simplicity, like parts have been given the same reference numerals as before. Referring specifically to Figures 14 to 17 inclusive, the casing 123 has a plurality of flow ports 13(a), 13(b), 13(c), 13(g) and 13(d) and a plurality of return ports 15(d), 15(g), 15(a), 15(b) and 15(c) along its length.

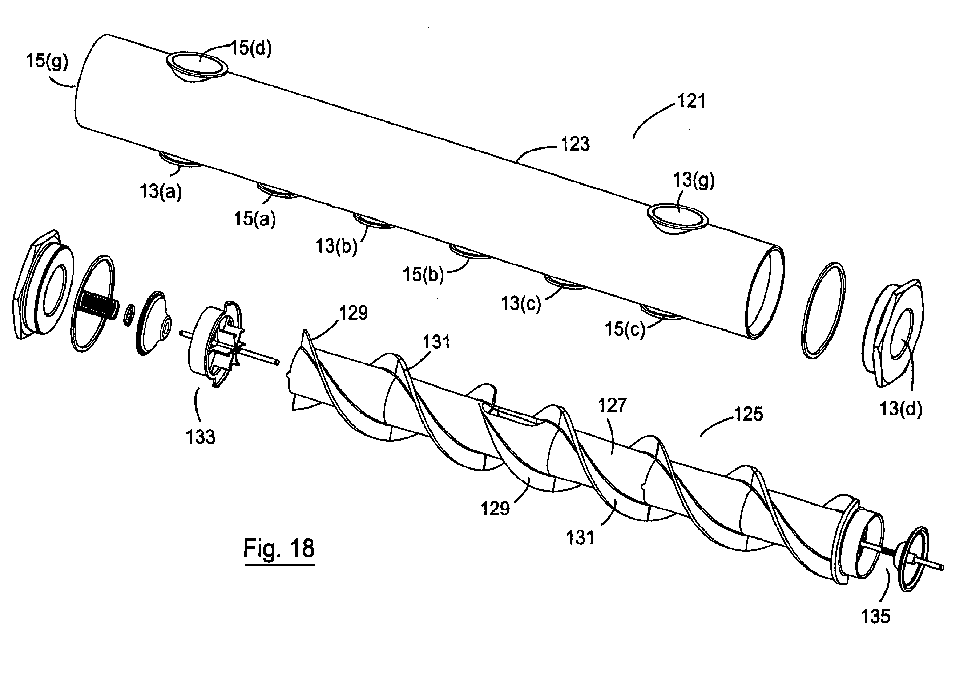

Referring specifically to Figure 18, there is shown an exploded view of the components of the manifold 121. The manifold 121 comprises a casing 123 and an insert 125. The insert 125 comprises a tube 127 having a pair of helical walls 129, 131 formed along its length. The pair of helical walls 129, 131, the tube 127 and the casing 123 define a pair of chambers forming the hot water chamber 9 and the cold water chamber 11 therebetween. The tube 127 is a substantially hollow tube with first non-return valve 133 inserted in one end of the tube 127 and a second non-return valve 135 inserted in the other end of the tube 127.

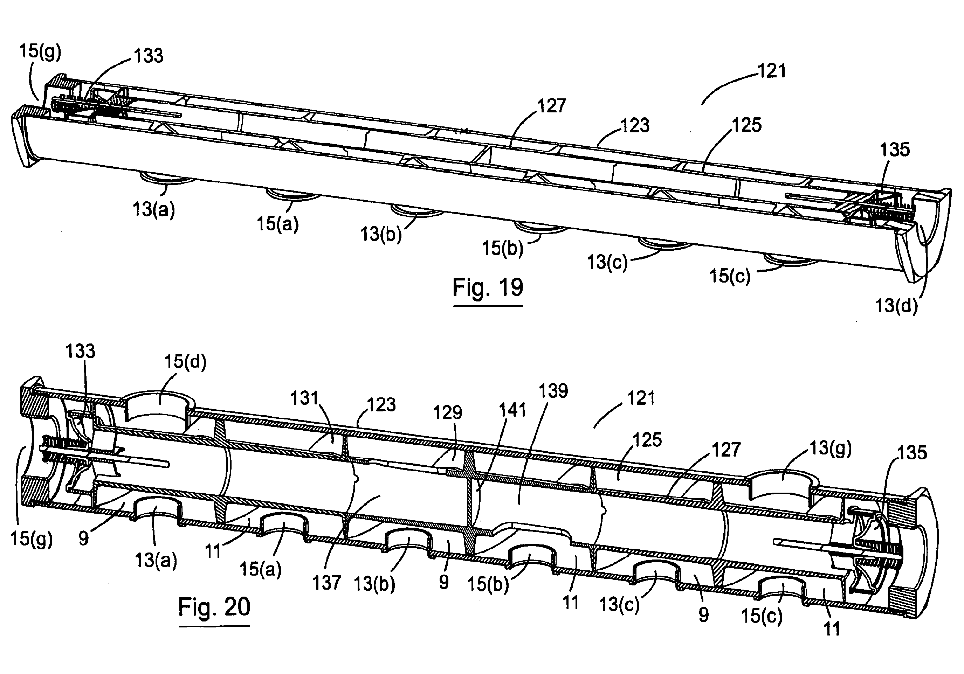

Referring specifically to Figure 20, there is shown a pair of apertures 137, 139 in the tube 127 and a central partition plate 141 in the tube 127. The non-return valve 133 is located in one end of the hollow inner tube 127 and a non-return valve 135 is placed in the opposite orientation to the first non-return valve 133 in the other end of the tube 127. The aperture 137 and non-return valve 135 respectively, and the aperture 139 and non-return valve 133 respectively, each provide a pressure-relieving recirculation passageway between the hot fluid chamber 9 and cold fluid chamber 11.

In use, hot water enters into the hot fluid chamber 9 through the return ports 15(d), 15(g), and follows the helical path of the hot fluid chamber 9 along the length of the manifold 121. The hot water is drawn out of the hot fluid chamber 9 to a sink sub-circuit (not shown) through the flow ports 13(a), 13(b), 13(c), as desired and, after passing through a heat sink 7, is returned to the manifold 121 to the cold fluid chamber 11 via the return ports 15(a), 15(b), 15(c). Water is then transferred through the flow ports 13(g) and 13(d) to one or both of the heat sources 5. If the pressure differential between the hot fluid chamber 9 and the cold fluid chamber 11 exceeds a predetermined amount, then either the non-return valve 133 or the non-return valve 135 will open, thereby permitting flow of either hot fluid from the hot fluid region 9 to the cold fluid region 11 or a flow of cold fluid from the cold fluid region 11 to the hot fluid region 9.

The three manifold embodiments 3, 80, 121 described are of two-part construction, the first part comprising the outer casing sub-assembly 31, 80, 123 constructed from a first rugged material such as a metal or a durable plastics material, and a second part comprising an inner insert sub-assembly 33, 90,125 consisting of an internal divider 35, 91, 129, 131 constructed from a second easily shapeable material such as plastics or a thin metal material.

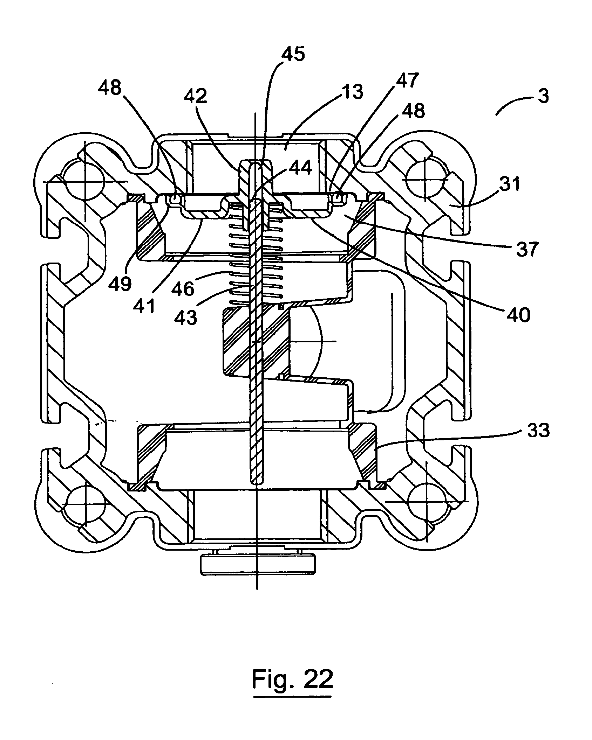

Fig. 22 shows another arrangement for mounting a non-return valve 37 in the manifold 3 of the type shown in Figs. 2 to 6. The valve 37 comprises a valve head 40 having a disc 41 with a cylindrical central body portion 42 substantially perpendicular to the disc 41. The valve head 40 is slidably mounted on an associated valve guide spindle 43 on the insert 33. An outer end 44 of the valve guide 43 slidably engages in a complementary co-axial bore 45 in the central body portion 42 of the valve head 40. A coil spring 46, mounted about the valve guide 43 and extending between the insert 33 and the valve head 40, urges the valve head 40 against an associated valve seat 47 surrounding an inlet port 13 on the manifold 3. The valve seat 47 is formed by a flat inside face of the manifold casing 31. An endless elastomeric seal 48 is mounted within an associated peripheral groove or channel 49 of the valve head 40 for sealing engagement between the valve head 40 and the valve seat 47. Conveniently, the seal 48 may be provided by co-moulding using a thermoplastic material into the moulded groove 49 in the valve head 40.

Ideally, the casing sub-assembly components will be manufactured from strong durable materials capable of being easily joined and cut. Mild or stainless steel tubing with welded-on flanges and machined or cast end plates would be an economical choice. Alternatively, extruded or cast metal tubing might be used, providing greater flexibility in mounting and facilitating the integration of additional functions such as cable management and means of close coupling additional modules. The wetted surfaces of the casting parts may be treated with suitable anti-corrosion and electrically insulating materials, for example, reinforced fluorocarbon coatings. It is also possible to manufacture the casing parts using heavily walled strong resin alloys containing for example polyamide or polyphenylene oxide, reinforced with glass fibre or other fibrous material. Injection moulding, structural foam moulding and pultrusion processes are suited to this application.

The insert sub-assembly 33 parts which have greater shape complexity, but do not have to bear similar pressure, pipework or shock-loads, may advantageously be manufactured from low cost filled or unfilled resin materials of low differential thermal expansion relative to the material of the casing tube. These materials should be substantially impervious to the fluid. The shape complexity of the insert components can be cost effectively realised using injection or compression moulding and engineered snap-fits between components.

In typical installations, heat sources include, but are not limited to, boilers, heat pumps and solar heat collection devices. Heat sinks include, but are not limited to, hot water heating cylinders, panel radiators and fan convection room heaters. Throughout this specification, reference has been made to a heating installation however it will be understood that the invention could also apply equally to a cooling installation and for a cooling installation the term hot would be replaced by cold and vice versa, and the term "heat" or "heating" would be substituted by "cool" or "cooling" respectively.

In this specification the terms "comprise, comprises, comprised and comprising" and the terms "include, includes, included and including" are all deemed totally interchangeable and should be afforded the widest possible interpretation.

The invention is not limited to the embodiments hereinbefore described but may be varied in both construction and detail within the scope of the appended claims.

## Claims

1. A manifold (3) comprising a casing (31), an internal divider (35) partitioning the interior of the casing into a first fluid chamber (9) and a separate second fluid chamber (11), a plurality of flow ports (13) and a plurality of return ports (15) in communication with the first fluid chamber, a plurality of flow ports (13) and a plurality of return ports (15) in communication with the second fluid chamber, the manifold (3) is a two part construction, the first part comprising the casing (31) constructed from a first, rugged material and the second part comprising an insert (33) having the internal divider (35) constructed from a second, shapeable material, **characterised in that** the internal divider comprises a pair of intertwined substantially co-axial helical walls extending along the longitudinal axis of the manifold defining a substantially helically shaped hot fluid chamber and a substantially helically shaped cold fluid chamber therebetween.

2. A manifold (3) as claimed in claim 1 in which the pair of intertwined co-axial helical walls (129, 131) are mounted about an inner tube (127).

3. A manifold (3) as claimed in claim 2 in which the tube (127) is substantially hollow, open at each end and with a divider plate (141) intermediate its ends blocking the tube into two distinct sections, each section having a passageway defining a fluid path between the hot fluid chamber and the cold fluid chamber.

4. A manifold (3) as claimed in claim 3 in which there is provided a pressure-operated normally-closed flow control valve (135, 133) disposed in each of the passageways (137, 139), one of which is arranged to selectively permit fluid flow in a direction from the hot fluid chamber to the cold fluid chamber and the other of which is arranged to selectively permit fluid flow in a direction from the cold fluid chamber to the hot fluid chamber.

5. A manifold (3) as claimed in any preceding claim in which the second, shapeable material is a plastic material.

6. A manifold (3) as claimed in claims 1 to 4 in which the second, shapeable material is a thin metal material.

7. A manifold (3) as claimed in any preceding claim in which the first, rugged material is one of or a combination of a metal material and a composite fibre-reinforced resin.

8. A manifold (3) as claimed in any preceding claim in which there is provided a first fluid passageway (22) in the internal divider (35) defining a first fluid path between the first fluid chamber (9) and the second fluid chamber (11), and in which there is provided a first pressure-operated flow control valve (21) arrangement disposed in the first fluid passageway.

9. A manifold (3) as claimed in claim 8 in which there is provided a second fluid passageway (24) in the internal divider defining a second fluid path between the first fluid chamber (9) and the second fluid chamber (11), and in which there is provided a second pressure-operated flow control valve (23) arrangement disposed in the second fluid passageway (24), said second flow control valve arrangement is mounted in the second fluid passageway with opposite polarity to the first pressure operated flow control valve (21) arrangement in the first fluid passageway so that each of the flow control valves operates to permit flow in one direction only while substantially preventing flow in the opposite direction.

10. A manifold (3) as claimed in any preceding claim in which there is provided a pressure-operated flow control valve (37) disposed in a plurality of the flow ports (13) and a plurality of the return ports (15).

11. A manifold (3) as claimed in claim 10 in which the flow control valves (37) in the plurality of flow ports (13) and the plurality of return ports (15) are integrated into the insert (33).

12. A manifold (3) as claimed in claim 10 in which the flow control valves (37) in the plurality of flow ports (13) and the plurality of return ports (15) are integrated into the casing (31).

13. A manifold (3) as claimed in any preceding claim in which the insert (33) defines a plurality of plenums (39) adjacent the flow ports and the return ports intermediate the chambers and the casing.

14. A manifold (3) as claimed in any preceding claim in which there is provided a removable barrier (41) intermediate an adjacent pair of plenums.

15. A manifold (3) as claimed in any preceding claim in which the insert (33) is a modular construction comprising a plurality of components connected together, each of the components having a connector for engagement of an adjacent component.

16. A manifold (3) as claimed in any preceding claim wherein the insert (33) is mounted within the casing by side rails on the insert which slidably engage within complementary grooves on an internal surface of the casing.

17. A manifold (3) as claimed in claims 10 to 12, wherein the pressure-operated flow control valve (37) comprises a valve head (40) slidably mounted on an associated valve guide (43) on the insert and biased by a spring (46) mounted between the insert and the valve head against a valve seat (47) formed at an inside face of the casing at a port in a side wall of the casing.

18. A manifold (3) as claimed in claim 17 wherein an endless elastomeric seal (48) is mounted within a complementary peripheral channel (49) in the valve head for sealing engagement between the valve head and the valve seat.

## Patentansprüche

1. Verteiler (3), umfassend ein Gehäuse (31), eine interne Trennwand (35), die das Innere des Gehäuses in eine erste Fluidkammer (9) und eine getrennte zweite Fluidkammer (11) unterteilt, eine Vielzahl von Strömungsanschlüssen (13) und eine Vielzahl von Rückstromanschlüssen (15), die mit der ersten Fluidkammer in Verbindung stehen, eine Vielzahl von Strömungsschlüssen (13) und eine Vielzahl von Rückstromanschlüssen (15), die mit der zweiten Fluidkammer in Verbindung stehen, wobei der Verteiler (3) eine zweiteilige Konstruktion ist, wobei der erste Teil das Gehäuse (31) umfasst, das aus einem ersten, robusten Material hergestellt ist, und der zweite Teil einen die interne Trennwand (35) aufweisenden Einsatz (33) umfasst, der aus einem zweiten, formbaren Material hergestellt ist, **dadurch gekennzeichnet, dass** die interne Trennwand ein Paar verschlungener im Wesentlichen koaxialer schraubenförmiger Wände umfasst, die sich entlang der Längsachse des Verteilers erstrecken und eine im Wesentlichen schraubenförmig geformte Warmfluidkammer und eine im Wesentlichen schraubenförmig geformte Kaltfluidkammer dazwischen definieren.

2. Verteiler (3) nach Anspruch 1, in dem das Paar verschlungene koaxiale schraubenförmige Wände (129, 131) um eine innere Röhre (127) angebracht sind.

3. Verteiler (3) nach Anspruch 2, wobei die Röhre (127) im Wesentlichen hohl und an beiden Enden offen ist und eine Trennplatte (141) zwischen ihren Enden aufweist, die die Röhre in zwei unterschiedliche Abschnitte blockiert, wobei jeder Abschnitt einen Durchgang aufweist, der einen Fluidpfad zwischen der Warmfluidkammer und der Kaltfluidkammer definiert.

4. Verteiler (3) nach Anspruch 3, in dem, in jedem der Durchgänge (137, 139) angeordnet, ein druckbetätigtes, normalerweise geschlossenes Strömungssteuerventil (135, 133) vorgesehen ist, wobei eines derselben dazu eingerichtet ist, selektiv Fluidstrom in einer Richtung von der Warmfluidkammer zu der Kaltfluidkammer zuzulassen und das andere derselben dazu eingerichtet ist, selektiv Fluidstrom in einer Richtung von der Kaltfluidkammer zu der Warmfluidkammer zuzulassen.

5. Verteiler (3) nach einem der vorangehenden Ansprüche, in dem es sich bei dem zweiten, formbaren Material um ein Kunststoffmaterial handelt.

6. Verteiler (3) nach Ansprüchen 1 bis 4, in dem es sich bei dem zweiten, formbaren Material um ein dünnes Metallmaterial handelt.

7. Verteiler (3) nach einem der vorangehenden Ansprüche, in dem es sich bei dem ersten, robusten Material um eines von oder eine Kombination von einem Metallmaterial und einem faserverstärkten Verbundharzmaterial handelt.

8. Verteiler (3) nach einem der vorangehenden Ansprüche, in dem ein erster Fluiddurchgang (22) in der internen Trennwand (35) vorgesehen ist, der einen ersten Fluidpfad zwischen der ersten Fluidkammer (9) und der zweiten Fluidkammer (11) definiert, und in dem eine erste druckbetätigte Strömungssteuerventil(21)-Einrichtung vorgesehen ist, die in dem ersten Fluiddurchgang angeordnet ist.

9. Verteiler (3) nach Anspruch 8, in dem ein zweiter Fluiddurchgang (24) in der internen Trennwand vorgesehen ist, der einen zweiten Fluidpfad zwischen der ersten Fluidkammer (9) und der zweiten Fluidkammer (11) definiert, und in dem eine zweite druckbetätigte Strömungssteuementil(23)-Einrichtung vorgesehen ist, die in dem zweiten Fluiddurchgang (24) angeordnet ist, wobei die zweite Strömungssteuerventileinuchtung mit entgegengesetzter Polarität zu der ersten druckbetätigten Strömungssteuementil(21)-Einrichtung in dem ersten Fluiddurchgang in dem zweiten Fluiddurchgang angebracht ist, so dass die Strömungssteuerventile jeweils arbeiten, um die Strömung nur in einer Richtung zuzulassen, während die Strömung in der entgegengesetzten Richtung im Wesentlichen verhindert wird.

10. Verteiler (3) nach einem der vorangehenden Ansprüche, in dem ein druckbetätigtes Strömungssteuerventil (37) vorgesehen ist, das in einer Vielzahl der Strömungsanschlüsse (13) und in einer Vielzahl der Rückstromschlüsse (15) angeordnet ist.

11. Verteiler (3) nach Anspruch 10, wobei die Strömungssteuerventile (37) in der Vielzahl von Strömungsanschlüssen (13) und der Vielzahl von Rückstromanschlüssen (15) in den Einsatz (33) integriert sind.

12. Verteiler (3) nach Anspruch 10, wobei die Strömungssteuerventile (37) in der Vielzahl von Strömungsanschlüssen (13) und der Vielzahl von Rückstromanschlüssen (15) in das Gehäuse (31) integriert sind.

13. Verteiler (3) nach einem der vorangehenden Ansprüche, wobei der Einsatz (33) eine Vielzahl von Sammelkammern (39) benachbart den Strömungsanschlüssen und den Rückstromanschlüssen zwischen den Kammern und dem Gehäuse definiert.

14. Verteiler (3) nach einem der vorangehenden Ansprüche, in dem eine ausbaubare Sperre (41) zwischen einem benachbarten Paar von Sammelkammern vorgesehen ist.

15. Verteiler (3) nach einem der vorangehenden Ansprüche, in dem es sich bei dem Einsatz (33) um eine modulare Konstruktion handelt, die eine Vielzahl von miteinander verbundenen Komponenten umfasst, wobei die Komponenten jeweils einen Verbinder für den Eingriff an einer benachbarten Komponente aufweisen.

16. Verteiler (3) nach einem der vorangehenden Ansprüche, wobei der Einsatz (33) mittels Seitenschienen an dem Einsatz in dem Gehäuse angebracht ist, die gleitfähig in komplementären Rillen auf einer internen Oberfläche des Gehäuses eingreifen.

17. Verteiler (3) nach Ansprüchen 10 bis 12, wobei das druckbetätigte Strömungssteuerventil (37) einen Ventilkopf (40) umfasst, der gleitfähig auf einer zugehörigen Ventilführung (43) an dem Einsatz angebracht ist und von einer zwischen dem Einsatz und dem Ventilkopf angebrachten Feder (46) gegen einen Ventilsitz (47) vorgespannt wird, der an einer Innenfläche des Gehäuses an einem Anschluss in einer Seitenwand des Gehäuses gebildet ist.

18. Verteiler (3) nach Anspruch 17, wobei eine endlose Elastomerdichtung (48) zum dichtenden Eingriff zwischen dem Ventilkopf und dem Ventilsitz in einer komplementären Umfangsnut (49) in dem Ventilkopf angebracht ist.

## Revendications

1. Collecteur (3) comprenant un boîtier (31), une cloison interne (35) qui sépare l'intérieur du boîtier en une première chambre à fluide (9) et une seconde chambre à fluide (11) distincte, une pluralité d'orifices d'écoulement (13) et une pluralité d'orifices de renvoi (15) en communication avec la première chambre à fluide, une pluralité d'orifices d'écoulement (13) et une pluralité d'orifices de renvoi (15) en communication avec la seconde chambre à fluide, le collecteur (3) est une construction en deux parties, la première partie comprenant le boîtier (31) construit dans un premier matériau robustifié et la seconde partie comprenant un insert (33) comportant la cloison interne (35) construit en un second matériau façonnable, **caractérisé en ce que** la cloison interne comprend une paire de parois hélicoïdales sensiblement coaxiales entrelacées s'étendant le long de l'axe longitudinal du collecteur définissant entre elles une chambre à fluide chaud sensiblement de forme hélicoïdale et une chambre à fluide froid sensiblement de forme hélicoïdale.

2. Collecteur (3) selon la revendication 1, dans lequel la paire de parois hélicoïdales coaxiales entrelacées (129, 131) est montée autour d'un tube interne (127).

3. Collecteur (3) selon la revendication 2, dans lequel le tube (127) est sensiblement creux, ouvert à chaque extrémité et présente une plaque de séparation (141) entre ses extrémités bloquant le tube en deux sections distinctes, chaque section ayant un passage définissant un chemin de fluide entre la chambre à fluide chaud et la chambre à fluide froid.

4. Collecteur (3) selon la revendication 3, dans lequel est fournie une vanne de régulation d'écoulement normalement fermée actionnée par pression (135, 133) disposée dans chacun des chemins (137, 139), dont l'un est agencé pour permettre sélectivement l'écoulement de fluide dans un sens depuis la chambre à fluide chaud vers la chambre à fluide froid et l'autre est agencé pour permettre sélectivement l'écoulement de fluide dans un sens depuis la chambre à fluide froid vers la chambre à fluide chaud.

5. Collecteur (3) selon l'une quelconque des revendications précédentes, dans lequel le second matériau façonnable est une matière plastique.

6. Collecteur (3) selon les revendications 1 à 4, dans lequel le second matériau façonnable est un matériau métallique mince.

7. Collecteur (3) selon l'une quelconque des revendications précédentes, dans lequel le premier matériau robustifié est l'un d'un matériau métallique et d'une résine composite renforcée par fibres ou une combinaison des deux.

8. Collecteur (3) selon l'une quelconque des revendications précédentes, dans lequel est fourni un premier passage de fluide (22) dans la cloison interne (35) définissant un premier chemin de fluide entre la première chambre à fluide (9) et la seconde chambre à fluide (11), et dans lequel est fourni un premier agencement de vanne de régulation d'écoulement actionnée par pression (21) disposé dans le premier passage de fluide.

9. Collecteur (3) selon la revendication 8, dans lequel est fourni un second passage de fluide (24) dans la cloison interne définissant un second chemin de fluide entre la première chambre à fluide (9) et la seconde chambre à fluide (11), et dans lequel est fourni un second agencement de vanne de régulation d'écoulement actionnée par pression (23) disposé dans le second passage de fluide (24), ledit second agencement de vanne de régulation d'écoulement est monté dans le second passage de fluide dans une polarité opposée à celle du premier agencement de vanne de régulation d'écoulement actionnée par pression (21) dans le premier passage de fluide de telle sorte que chacune des vannes de régulation d'écoulement permette l'écoulement dans un seul sens uniquement tout en empêchant sensiblement l'écoulement dans le sens opposé.

10. Collecteur (3) selon l'une quelconque des revendications précédentes, dans lequel est fournie une vanne de régulation d'écoulement actionnée par pression (37) disposée dans une pluralité des orifices d'écoulement (13) et une pluralité des orifices de renvoi (15).

11. Collecteur (3) selon la revendication 10, dans lequel les vannes de régulation d'écoulement (37) dans la pluralité d'orifices d'écoulement (13) et la pluralité d'orifices de renvoi (15) sont intégrées dans l'insert (33).

12. Collecteur (3) selon la revendication 10, dans lequel les vannes de régulation d'écoulement (37) dans la pluralité d'orifices d'écoulement (13) et la pluralité d'orifices de renvoi (15) sont intégrées dans le boîtier (31).

13. Collecteur (3) selon l'une quelconque des revendications précédentes, dans lequel l'insert (33) définit une pluralité de plenums (39) adjacents aux orifices d'écoulement et aux orifices de renvoi entre les chambres et le boîtier.

14. Collecteur (3) selon l'une quelconque des revendications précédentes, dans lequel est fournie une barrière amovible (41) entre une paire adjacente de plenums.

15. Collecteur (3) selon l'une quelconque des revendications précédentes, dans lequel l'insert (33) est une construction modulaire comprenant une pluralité de composants raccordés ensemble, chacun des composants ayant un connecteur pour son engagement à un composant adjacent.

16. Collecteur (3) selon l'une quelconque des revendications précédentes, dans lequel l'insert (33) est monté dans le boîtier par des rails latéraux sur l'insert qui s'engagent de manière coulissante dans des rainures complémentaires sur une surface interne du boîtier.

17. Collecteur (3) selon les revendications 10 à 12, dans lequel la vanne de régulation d'écoulement actionnée par pression (37) comprend une tête de vanne (40) montée de manière coulissante sur un guide de vanne associé (43) sur l'insert et sollicitée par un ressort (46) monté entre l'insert et la tête de vanne contre un siège de vanne (47) formé au niveau d'une face intérieure du boîtier au niveau d'un orifice dans une paroi latérale du boîtier.

18. Collecteur (3) selon la revendication 17, dans lequel un joint élastomère sans fin (48) est monté dans un canal périphérique complémentaire (49) dans la tête de vanne pour s'engager de manière hermétique entre la tête de vanne et le siège de vanne.
